## Europäisches Patentamt

## European Patent Office

## Office européen des brevets

(19)

(11) Veröffentlichungsnummer: **0 284 853 B1**

(12) ## EUROPÄISCHE PATENTSCHRIFT

(45) Veröffentlichungstag der Patentschrift: **29.01.92**

(51) Int. Cl.⁵: **F02C 3/28**, F01K 23/06, C10J 3/84

(21) Anmeldenummer: **88103807.9**

(22) Anmeldetag: **10.03.88**

(54) **Kombiniertes Gas- und Dampfturbinenkraftwerk.**

(30) Priorität: **23.03.87 DE 3709469**

(43) Veröffentlichungstag der Anmeldung:
**05.10.88 Patentblatt 88/40**

(45) Bekanntmachung des Hinweises auf die
Patenterteilung:
**29.01.92 Patentblatt 92/05**

(84) Benannte Vertragsstaaten:
**AT BE CH DE ES FR GB IT LI LU NL SE**

(56) Entgegenhaltungen:
**US-A- 4 092 825**
**US-A- 4 101 294**
**US-A- 4 150 953**

(73) Patentinhaber: **SIEMENS AKTIENGESELL-
SCHAFT
Wittelsbacherplatz 2
W-8000 München 2(DE)**

(72) Erfinder: **Karg, Jürgen
Seuffertstrasse 16
W-8000 Nürnberg 70(DE)**

EP 0 284 853 B1

## Beschreibung

Die Erfindung bezieht sich auf ein Gas- und Dampfturbinenkraftwerk mit einem vorgeschalteten Kohlevergaser und einer dem Kohlevergaser nachgeschalteten Gaskühl- und Gasreinigungsanlage.

Kombinierte Gas- und Dampfturbinenkraftwerke mit vorgeschalteten Kohlevergasern sind bekannt. Bei solchen kombinierten Gas- und Dampfturbinenkraftwerken wird die Kohle im Kohlevergaser mit einem Sauerstoff-/Wasserdampf- oder Luft-/Wasserdampfgemisch als Vergasungsmittel umgesetzt. Das erzeugte Rohgas wird, gegebenenfalls nach vorherigem Quensch, in Wärmetauschern bei gleichzeitiger Dampferzeugung abgekühlt und das gekühlte Rohgas einer Gasreinigung unterzogen. Bei der Gasreinigung werden Asche- und Staubpartikel sowie Schwefelverbindungen aus dem Rohgas entfernt. Das gereinigte Gas, auch Reingas genannt, wird meist wieder aufgeheizt und einer Gasturbine zugeleitet.

Unter den bekannten Vergasungssystemen zeichnen sich Festbett-Kohlevergaser dadurch aus, daß verfahrensbedingt ein sehr großer Anteil der eingesetzten Kohleenergie in Form von chemisch gebundener Energie im erzeugten Brenngas enthalten ist und nur ein verhältnismäßig kleiner Anteil der Energie in fühlbare Wärme umgesetzt wird. Wegen der gegenüber anderen Vergasungssystemen niedrigeren Vergasungstemperatur fallen Teere, Öle und Naphtha an, die in der Gaskühl- und Gasreinigungsanlage kondensieren.

Es ist bekannt, diese anfallenden Öl- und Naphthaanteile als Produkte zu verkaufen oder sie einer separaten Nutzung zuzuführen. So können die brennbaren Kondensate beispielsweise zur Unterfeuerung von Prozeßdampferzeugern genutzt werden.

Es ist aber durch die US-A-4,150,953 bei einem kombinierten Gas- und Dampfturbinenkraftwerk mit vorgeschaltetem Kohlevergaser auch bekannt, die beim Gasquench anfallenden Teer-, Öl- und Naphthaanteile abzutrennen, die Teeranteile in den Eingang des Kohlevergasers zurückzuführen und die Naphtha- und Ölanteile fortlaufend der dem Kohlevergaser zugeführten Luft beizumischen. Das heißt, es werden, wenn auch auf getrennten Wegen, sowohl die Teerfraktion als auch die Naphtha- und Ölanteile in den Vergaser zurückgeführt. Das erneute Umsetzen der Öl- und Naphthaanteile im Kohlevergaser vergrößert zwar die Gasausbeute des Kohlevergasers, verringert aber zugleich auch den Gesamtwirkungsgrad.

Durch die US-A-4,092,825, bei der es sich nicht um ein kombiniertes Gas- und Dampfturbinenkraftwerk, sondern um ein Dampfkraftwerk für Grundlast und ein separates Gasturbinenkraftwerk für Spitzenlast handelt, wird das Kohlegas des Kohlevergasers einer Fischer-Tropsch-Synthese und Hydrierung unterzogen, in der gezielt Flüssiggasprodukte erzeugt werden. Das so erzeugte flüssige Kohlenwasserstoffgemisch wird gespeichert, um bei Bedarf damit im Gasturbinenkraftwerk Spitzenlaststrom zu erzeugen. Eine Wirkungsgradoptimierung ist dieser Offenbarung nicht zu entnehmen.

Alle diese bekannten Verfahren führen jedoch bei einem kombinierten Gas- und Dampfturbinenkraftwerk dazu, daß die chemische Energie der Naphtha- und Ölanteile in der Gasturbine nicht oder nur zum Teil genutzt werden können. Bezogen auf die eingesetzte Kohlenenergie stellen alle diese Verfahren energetische und exergetische Verlustquellen dar, die den erzielbaren Gesamtwirkungsgrad begrenzen.

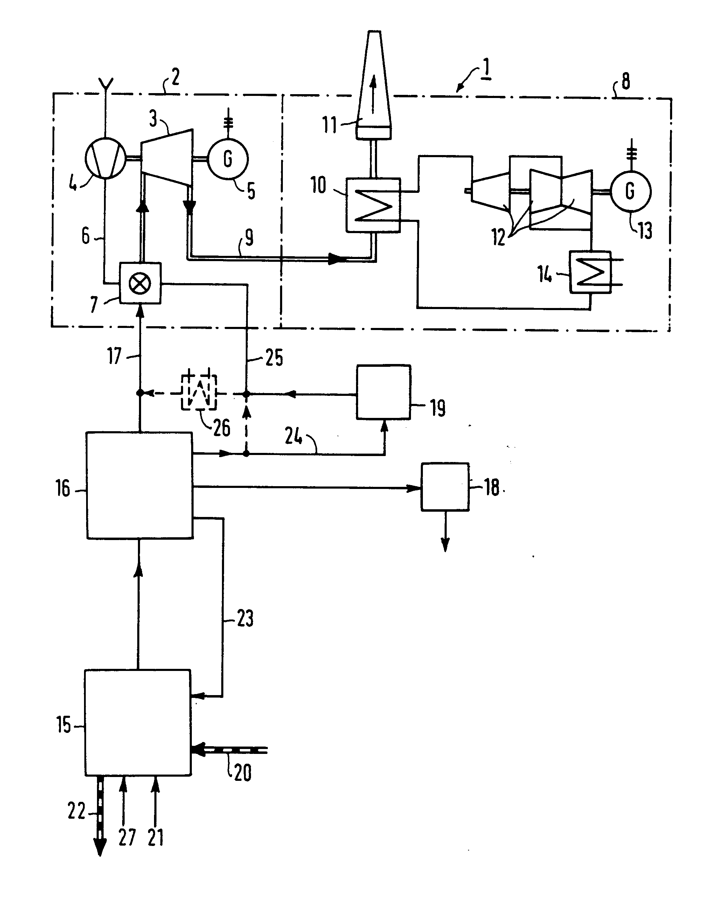

Durch die US-A-4,101,294 ist es bei einem Gasturbinenkraftwerk mit vorgeschaltetem Kohlevergaser bekannt, die ausgeschiedenen Flüssigprodukte wieder aufzuheizen und sie dem gereinigten, aufgeheizten Brenngas vor Einleitung in die Brennkammer der Gasturbine wieder über einen speziellen Wiederaufheiz-Sättiger zuzuführen. Durch diese Maßnahmen würde der Gesamtwirkungsgrad trotz erneuter Aufheizungen der Naphtha- und Ölanteile positiv beeinflußt, der technische Aufwand jedoch deutlich erhöht werden. In Wirklichkeit funktioniert diese Schaltung jedoch nicht, weil sich in dem bei 12a ausgeschiedenen Kondensat auch Teer befindet, das sich mit der Zeit im Wiederaufheiz-Sättiger-Kreislauf anreichern würde und in kurzer Zeit zu einer Verstopfung der Poren B in Figur 3 führen würde.

Der Erfindung liegt daher die Aufgabe zugrunde, bei einem kombinierten Gas- und Dampfturbinenkraftwerk mit einem vorgeschalteten Kohlevergaser den Gesamtwirkungsgrad bei der Umsetzung der Kohle in elektrische Energie zu erhöhen.

Diese Aufgabe wird durch die Merkmale des Anspruchs 1 gelöst. Weitere vorteilhafte Ausgestaltungen sind den Ansprüchen 2 bis 8 zu entnehmen.

Hierzu sieht die Erfindung vor, daß die bei der Gaskühlung und Gasreinigung anfallenden Teeranteile in den Kohlevergaser zum Zwecke der Crakkung, Vergasung bzw. teilweisen Verbrennung zurückgeführt und die anfallenden Naphtha- und Ölanteile als zusätzlicher Gasturbinenbrennstoff in die Brennkammer der Gasturbine eingedüst werden. Durch diese Maßnahme werden die anfallenden Naphtha- und Ölanteile mit ihrem vollen Heizwert zur Erzeugung elektrischer Energie herangezogen ohne mit weiteren Verlusten im Bereich der Gaserzeugung belastet zu werden. Mit diesem Verfahren läßt sich der Gesamtwirkungsgrad des kombinierten Gas- und Dampfturbinenkraftwerks mit vorgeschaltetem Kohlevergaser ohne nennenswerte Erhöhung des technischen Aufwandes deutlich gegenüber den bekannten Systemen verbessern.

In zweckmäßiger Ausgestaltung der Erfindung könnten die laufend anfallenden Naphtha- und Ölanteile kontinuierlich dem gereinigten und wiederaufgeheizten Brenngas beigemischt werden. Dies hat zur Folge, daß der Heizwert des Brenngases angehoben und dadurch die der Gasturbine zugeführte chemisch gebundene Energie erhöht wird.

In besonders vorteilhafter Weiterbildung der Erfindung können die auskondensierten Naphtha- und Ölanteile in einen Speicher eingeleitet und bedarfsweise der Brennkammer der Gasturbine zugeleitet werden. Hiermit wird erreicht, daß die Naphtha- und Ölanteile bei Teillast zurückgehalten werden können und bei Vollast, bei Überlast oder bei plötzlichem Lastanstieg zum Einsatz kommen können. Somit kann auf Lastschwankungen flexibler reagiert werden, als dies sonst durch Umsteuerung des Kohlevergasers und der diesem vorgeschalteten Luftzerlegungsanlage möglich wäre. Außerdem wird hiermit erreicht, daß die dem Speicher zu entnehmenden Naphtha- und Ölfraktionen beim Anfahren anstelle der sonst hierfür benötigten Hilfsbrennstoffe verwendet werden können.

Weitere Einzelheiten der Erfindung werden anhand eines in der FIG dargestellten Ausführungsbeispiels erläutert. Es zeigt:

die FIG    eine schematische Darstellung eines
            erfindungsgemäßen        kombinierten
            Gas-  und  Dampfturbinenkraftwerks
            mit einem vorgeschalteten Festbett-
            Kohlevergaser

Die schematische Darstellung des Gas- und Dampfturbinenkraftwerks 1 zeigt im Gasturbinenkraftwerk 2 die Gasturbine 3 mit angekoppeltem Luftverdichter 4 und Generator 5 und die der Gasturbine vorgeschaltete, an die Frischluftleitung 6 des Luftverdichters 4 angeschlossene, Brennkammer 7. Die schematische Darstellung des Dampfturbinenkraftwerks 8 zeigt den an der Abgasleitung 9 der Gasturbine 2 angeschlossenen Abhitze- dampferzeuger 10, einen abgasseitig nachgeschal- teten Kamin 11, die Dampfturbine 12 mit dem angekoppelten Generator 13 und den Kondensator 14.

In der FIG erkennt man außerdem einen Kohlevergaser 15, im vorliegenden Fall einen Festbettvergaser, und eine dem Kohlevergaser nachgeschaltete Gaskühl- und Gasreinigungsanlage 16. Die Gaskühl- und Gasreinigungsanlage 16 ist mit ihrer Reingasleitung 17 an der Brennkammer 7 des Gasturbinenkraftwerks 2 angeschlossen. Außerdem sind der Gaskühl- und Gasreinigungsanlage 16 eine Abwasserbehandlungsanlage 18 und ein Öl- und Naphthaspeicher 19 zugeordnet.

Beim Betrieb des kombinierten Gas- und Dampfturbinenkraftwerks 1 mit dem vorgeschalteten Kohlevergaser 15 werden dem Kohlevergaser über die Brennstoffleitung 20 stückige, gegebenenfalls auch agglomerierte Kohle und als Vergasungsmittel Sauerstoff 21 aus einer hier nicht dargestellten Luftzerlegungsanlage und Wasserdampf 27 zugeführt. Das bei der Vergasung anfallende Rohgas wird der Gaskühl- und Gasreinigungsanlage 16 zugeführt. Die bei der Vergasung anfallende Schlacke wird über die Abzugsleitung 22 separat abgezogen. In der rohgasseitig dem Kohlevergaser nachgeschalteten Gaskühl- und Gasreinigungsanlage 16 wird das Gas von Staub, Asche, Schwefel, Teer und Öl- und Naphthaanteilen befreit und als Reingas über die Reingasleitung 17 der Brennkammer 7 des kombinierten Gas- und Dampfturbinenkraftwerks zugeführt. Es wird dort in der Brennkammer 7 mit der verdichteten Frischluft aus dem Luftverdichter 4 verbrannt. Das heiße Abgas der Gasturbine wird in bekannter Weise im Abhitzekessel 10 zur Dampferzeugung für die Dampfturbine 12 des Dampfturbinenkraftwerks 8 herangezogen.

Die bei der Gaskühlung und Gasreinigung an- fallenden Teeranteile werden bei der erfindungsgemäßen Anordnung über die Rückführleitung 23 in den Vergaser 15 zurückgeleitet. Dort werden sie gecrackt, vergast und teilweise verbrannt, wobei die Umwandlungsprodukte in dem dem Kohlevergaser entströmenden Rohgas wieder zu finden sind. Die bei der Gaskühlung auskondensierten Öl- und Naphthaanteile werden im Ausführungsbeispiel über eine separate Leitung 24 einem Öl- und Naphthaspeicher 19 zugeführt. Der sich im Öl- und Naphthaspeicher ansammelnde Brennstoff kann dann zum Anfahren der Gasturbine 3 oder aber bei Vollastbetrieb als Zusatzbrennstoff der Brennkammer 7 der Gasturbine zugeführt werden. Auch bei plötzlichen Laststeigerungen kann durch ihn die Leistung des Gas- und Dampfturbinenkraftwerks relativ schnell angehoben werden. Hierdurch werden Hilfsbrennstoffe wie Erdgas und Öl, die gegebenenfalls zum Anfahren des Gas- und Dampfturbinenkraftwerks benötigt werden, eingespart.

Die Zuführung der Öl- und Naphthaanteile zur Brennkammer der Gasturbine kann über die Hilfsleitung 25 als Flüssigbrennstoff erfolgen. In diesem Fall werden Öl- und Naphtha direkt in die Brennkammer 7 eingedüst. Es ist jedoch auch möglich, diese Öl- und Naphthaanteile über einen separaten, hier gestrichelt dargestellten Wärmetauscher 26 aufzuheizen und sie als Gas dem der Brennkammer 7 der Gasturbine 3 zuströmenden Reingas beizumischen.

Ein besonderer Vorteil dieser Anordnung besteht darin, daß der Brennkammer 7 der Gasturbine 3 auf diese Weise ein höherer Anteil an chemisch gebundener Brennstoffenergie, bezogen auf den Kohleenergieeinsatz, zugeleitet werden kann als bei allen anderen bekannten Verfahren. Durch die so erreichte Reduzierung der Energieverluste und die thermodynamisch vorteilhafte Erhöhung des Gasturbinenleistungsanteils wird letztlich eine deutliche Verbesserung des Gesamtwirkungsgrades erreicht. Dies gilt ganz besonders beim Einsatz von Festbett-Kohlevergasern.

**Patentansprüche**

1. Kombiniertes Gas- und Dampfturbinenkraftwerk mit einem vorgeschalteten Kohlevergaser und einer dem Kohlevergaser nachgeschalteten Gaskühl- und Gasreinigungsanlage, wobei die bei der Gaskühlung und Gasreinigung (16) anfallenden Teeranteile in den Kohlevergaser (15) zu Zwecken der Crackung, Vergasung und teilweisen Verbrennung zurückgeführt werden, **dadurch gekennzeichnet,** daß die bei der Gasreinigung anfallenden Naphtha- und Ölanteile als zusätzlicher Gasturbinenbrennstoff in die Brennkammer (7) der Gasturbine eingedüst werden.

2. Kombiniertes Gas- und Dampfturbinenkraftwerk nach Anspruch 1, **dadurch gekennzeichnet**, daß die laufend anfallenden Naphtha- und Ölanteile kontinuierlich dem gereinigten und wieder aufgeheizten Brenngas beigemischt werden.

3. Kombiniertes Gas- und Dampfturbinenkraftwerk nach Anspruch 1, **dadurch gekennzeichnet**, daß die auskondensierten Naphtha- und Ölanteile in einen Speicher (19) eingeleitet und bedarfsweise der Brennkammer (7) der Gasturbine (3) zugeleitet werden.

4. Kombiniertes Gas- und Dampfturbinenkraftwerk nach Anspruch 3, **dadurch gekennzeichnet**, daß die Naphtha- und Ölanteile als Flüssigbrennstoff unmittelbar in die Brennkammer (7) der Gasturbine (3) eingedüst werden.

5. Kombiniertes Gas- und Dampfturbinenkraftwerk nach Anspruch 3, **dadurch gekennzeichnet**, daß die Naphtha- und Ölanteile nach vorheriger Verdampfung dem Brenngas der Gasturbine (3) beigemischt werden.

6. Kombiniertes Gas- und Dampfturbinenkraftwerk nach Anspruch 2, **dadurch gekennzeichnet**, daß die anfallenden Naphtha- und Ölanteile vor der Beimischung zum gereinigten Brenngas auf annähernde Brenngastemperatur aufgeheizt werden.

7. Kombiniertes Gas- und Dampfturbinenkraftwerk nach Anspruch 1, **dadurch gekennzeichnet**, daß die laufend anfallenden Naphtha- und Ölanteile kontinuierlich als Flüssigbrennstoff unmittelbar in die Brennkammer (7) der Gasturbine (3) eingedüst werden.

8. Kombiniertes Gas- und Dampfturbinenkraftwerk nach Anspruch 1, **gekennzeichnet** durch die Verwendung eines Festbettkohlevergasers (15).

**Claims**

1. A combined gas and steam turbine power plant with an upstream coal gasifier and a gas cooling and gas purification unit, downstream of the coal gasifier, wherein the tar components, collected by gas cooling and gas purification (16) for the purposes of cracking, gasification and partial combustion, are returned to the coal gasifier (15), characterised in that the naphtha and oil components collected during gas purification are injected as additional gas turbine fuel into the combustion chamber (7) of the gas turbine.

2. A combined gas and steam turbine power plant according to claim 1, characterised in that the naphtha and oil components continuously collected are admixed continuously with the cleaned and reheated fuel gas.

3. A combined gas and steam turbine power plant according to claim 1, characterised in that the naphtha and oil components which have been condensed out are led into a reservoir (19) and, if required, supplied to the combustion chamber (7) of the gas turbine.

4. A combined gas and steam turbine power plant according to claim 3, characterised in the naphtha and oil components are injected as liquid fuel directly into the combustion chamber (7) of the gas turbine (3).

5. A combined gas and steam turbine power plant according to claim 3, characterised in that the naphtha and oil components are admixed with the fuel gas of the gas turbine (3) after previous evaporation.

6. A combined gas and steam turbine power plant according to claim 2, characterised in that the naphtha and oil components collected before admixing with the cleaned fuel gas are heated to approximately fuel gas temperature.

7. A combined gas and steam turbine power plant according to claim 1, characterised in that the naphtha and oil components continuously collected are injected continuously as liquid fuel directly into the combustion chamber of the gas turbine (3).

8. A combined gas and steam turbine power plant, according to claim 1, characterized by the use of a fixed bed coal gasifier (15).

**Revendications**

1. Centrale électrique combinée à turbine à gaz et à turbine à vapeur, comprenant un gazogène à charbon en amont et une installation de refroidissement des gaz et d'épuration des gaz montée en aval du gazogène à charbon, les proportions de goudron se formant dans le refroidissement des gaz et dans l'épuration des gaz étant retournées en vue d'être craquées, d'être gazéifiées et d'être partiellement brûlées dans le gazogène à charbon, caractérisée en ce que les proportions de naphte et d'huile se formant, lors de l'épuration des gaz, sont injectées en tant que combustible supplémentaire pour la turbine à gaz dans la chambre de combustion (7) de la turbine à gaz.

2. Centrale électrique combinée à turbine à gaz et à turbine à vapeur suivant la revendication 1,
   caractérisée,
   en ce que les proportions de naphte et d'huile qui se forment en continu sont mélangées en continu au gaz de combustion épuré et chauffé à nouveau.

3. Centrale électrique combinée à turbine à gaz et à turbine à vapeur suivant la revendication 1,
   caractérisée,
   en ce que les proportions de naphte et d'huile condensées sont envoyées dans un réservoir (19) et, en cas de besoin, sont envoyées à la chambre de combustion (17) de la turbine à gaz (3).

4. Centrale électrique combinée à turbine à gaz et à turbine à vapeur suivant la revendication 3,
   caractérisée,
   en ce que les proportions de naphte et d'huile sont injectées en tant que combustible liquide directement dans la chambre de combustion (7) de la turbine à gaz (3).

5. Centrale électrique combinée à turbine à gaz et à turbine à vapeur suivant la revendication 3,
   caractérisée,
   en ce que les proportions de naphte et d'huile sont, après évaporation préalable, mélangées au gaz de combustion de la turbine à gaz (3).

6. Centrale électrique combinée à turbine à gaz et à turbine à vapeur suivant la revendication 2,
   caractérisée,
   en ce que les proportions de naphte et d'huile se produisant sont portées, avant le mélange au gaz de combustion épuré, approximativement à la température du gaz de combustion.

7. Centrale électrique combinée à turbine à gaz et à turbine à vapeur suivant la revendication 1,
   caractérisée,
   en ce que les proportions de naphte et d'huile se formant en continu sont injectées en continu, en tant que combustible liquide, directement dans la chambre de combustion (7) de la turbine à gaz (3).

8. Centrale électrique combinée à turbine à gaz et à turbine à vapeur suivant la revendication 1,
   caractérisée,
   par l'utilisation d'un gazogène à charbon (15) à lit fixe.